# EUROPÄISCHE PATENTSCHRIFT

(11) **EP 1 083 083 B1**
(45) Veröffentlichungstag und Bekanntmachung des Hinweises auf die Patenterteilung: **24.05.2006**
(21) Anmeldenummer: 00116990.3
(22) Anmeldetag: 08.08.2000
(51) Int. Cl.: B60N 2/22, B60N 2/20, B60N 2/44

(54) **Beschlag für einen Fahrzeugsitz**
Hinge for a vehicle seat
Articulation pour un siège de véhicule

(30) Priorität: 09.09.1999 DE 19942977
(43) Veröffentlichungstag der Anmeldung: 14.03.2001
(73) Patentinhaber: KEIPER GmbH & Co. KG, 67657 Kaiserslautern (DE)
(72) Erfinder: Stilleke, Martin, 45657 Recklinghausen (DE)
(74) Vertreter: Patentanwälte Hosenthien-Held und Dr. Held

(56) Entgegenhaltungen:
- DE-A- 4 423 634
- DE-U- 29 615 132
- GB-A- 1 550 187

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der DE 296 15 132 U1 ist ein Beschlag bekannt, bei dem eine Klinke beim Festlegen des Beschlagunterteils durch einen als Sperrelement wirkenden Spannexzenter gehalten wird, welcher durch ein Schaltblech bewegt werden kann. Diese Mehrstufigkeit macht eine Vielzahl von einzelnen Bauteilen notwendig, was zu einem hohen Aufwand bei der Herstellung und bei der Montage führt. Außerdem sind beim Entriegeln zum Ausgleich von Fertigungstoleranzen relativ große Wege zurückzulegen.

Die GB 1 550 187 A offenbart einen Beschlag der eingangs genannten Art. Dabei sind an einem der beiden Beschlagteile sowohl eine Klinke zum Verriegeln der Beschlagteile als auch ein Sicherungselement zum Sichern der Klinke angelenkt. Die Klinke und das Sicherungselement sind durch einen weiteres Glied gelenkig miteinander verbunden. Das Sicherungselement liegt an einem Anschlag als weiterem Sicherungselement an, wobei die Anlagefläche radial zur Schwenkrichtung des erstgenannten Sicherungselementes und tangential zur Schwenkrichtung der Klinke verläuft.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Die Anlage der Sperrelemente aneinander im verriegelten Zustand der Beschlagteile des Gelenkbeschlages definiert einen Ausgangszustand für einen Entriegelungsvorgang und für den Crashfall, der ein Klappern aufgrund von Relativbewegungen zwischen den Sperrelementen verhindert. Zugleich können die in Anlage befindlichen Sperrelemente als Widerlager dienen, beispielsweise um einem Spiel in den Lagerstellen der Beschlagteile und/oder der Klinke entgegenwirken zu können, d.h. das Spiel verringern oder beseitigen zu können. Dadurch wird eine weitere Quelle für störende Klappergeräusche vermieden. Die Anzahl der Bauteile bleibt gering, so dass Herstellung und Montage des Beschlags einfach und kostengünstig sind.

Dadurch, dass im verriegelten Zustand der Beschlagteile die Anlagefläche der beiden Sperrelemente aneinander eine radiale Komponente bezüglich der Schwenkachse der Klinke aufweist, verläuft die besagte Anlagefläche wenigstens teilweise quer zur anfänglichen, öffnenden Schwenkrichtung der Klinke aus dem verriegelten Zustand heraus, was für die Verriegelungsfunktion der Sperrelemente von Vorteil ist. Dadurch, dass die besagte Anlagefläche im wesentlichen tangential zur Schwenkrichtung des an der Klinke angelenkten Sperrelementes angeordnet ist, können die die Beschlagteile leicht entriegeln werden, indem das an der Klinke angelenkte Sperrelement dann - bis auf einen geringen Reibungswiderstand - leicht um seine Schwenkachse geschwenkt wird, um die Sicherung der Klinke aufzuheben. Vorzugsweise bildet dieses an der Klinke angelenkte Sperrelement zugleich das Bauteil zum Entriegeln der Klinke.

Als einfaches Sicherungselement für die Sperrelemente ist vorzugsweise eine Feder vorgesehen, welche die Sperrelemente unter Spannung in Anlage aneinander hält.

Die Feder kann dann die in Anlage aneinander befindlichen Sperrelemente als Widerlager benutzen, um das Spiel an den Lagern der Beschlagteile und/oder der Klinke herauszudrücken. Vorzugsweise hält die Feder über das an der Klinke angelenkte Sperrelement zugleich die Klinke im verriegelten Zustand, so daß für die Klinke kein weiteres Bauteil zur Sicherung notwendig ist.

Um die Kraft der Feder mit mehreren Kraftkomponenten gleichzeitig wirken zu lassen, bilden die Angriffsstelle der Feder an einem der Sperrelemente, die Anlagestelle der Sperrelemente aneinander und die Anlagestelle zwischen der Klinke und dem mit der Klinke zusammenwirkenden Beschlagteil im verriegelten Zustand vorzugsweise ein Dreieck. Um auf die gleiche einfache Weise das Spiel verringern oder vorzugsweise beseitigen zu können, bilden vorzugsweise auch die Anlagestelle zwischen der Klinke und dem Beschlagteil im verriegelten Zustand, die gemeinsame Schwenkachse der Beschlagteile und die Schwenkachse der Klinke ein Dreieck.

Ein erfindungsgemäßer Fahrzeugsitz weist wenigstens einen, vorzugsweise zwei der erfindungsgemäßen Beschläge auf.

Im folgenden ist die Erfindung anhand eines in der Zeichnung dargestellten Ausführungsbeispiels näher erläutert. Es zeigen
- Fig. 1: eine Seitenansicht eines Teiles des Ausführungsbeispiels,
- Fig. 2: einen Schnitt entlang der Linie II-II in Fig. 1, und

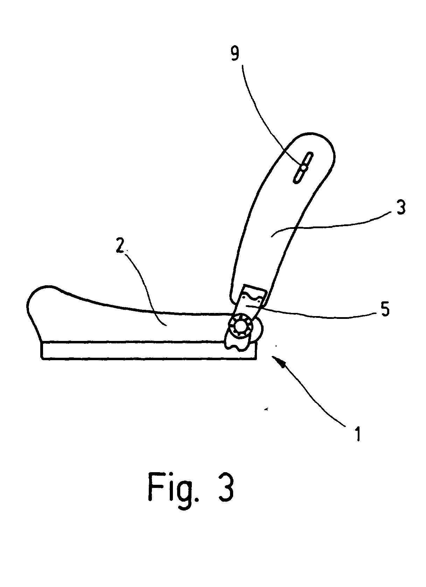

- Fig. 3: eine Seitenansicht eines Fahrzeugsitzes, der als linker Vordersitz in einem Kraftfahrzeug dient.

Ein als Vordersitz für ein zweitüriges Kraftfahrzeug ausgebildeter Fahrzeugsitz 1 weist ein Sitzteil 2 und eine Rückenlehne 3 auf. Die Rückenlehne 3 ist über je einen Beschlag 5 auf jeder Seite des Fahrzeugsitzes 1 am Sitzteil 2 angebracht und relativ zu diesem in der Neigung einstellbar. Der beispielsweise als Taumelbeschlag ausgebildete Beschlag 5 weist eine nachfolgend beschriebene Freischwenkvorrichtung auf, die durch Betätigung eines seitlich an der Rückenlehne 3 angebrachten Betätigungshebels 9 entriegelbar ist, so daß die Rückenlehne 3 freigeschwenkt werden kann, d.h. ohne Verlust der eingestellten Neigung der Rückenlehne 3 nach vorne geklappt werden kann, um den Zugang zur Rücksitzbank des Kraftfahrzeuges zu ermöglichen.

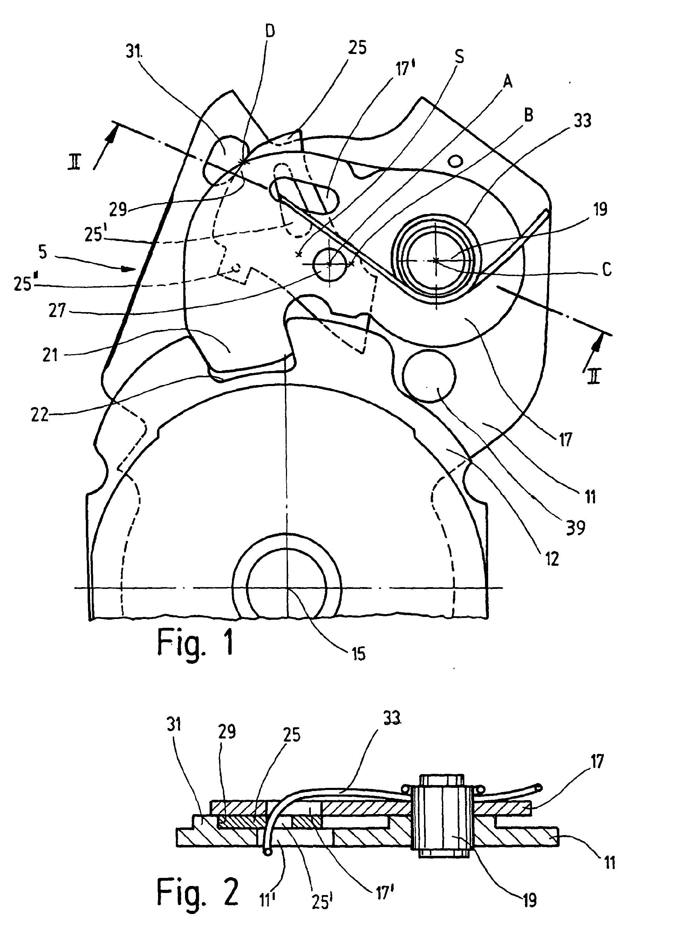

Im folgenden ist ein Beschlag 5 auf der rechten Seite des Fahrzeugsitzes 1 beschrieben, und zwar zunächst im verriegelten Zustand. Der Beschlag 5 weist ein Lagerblech 11 und ein Beschlagoberteil 12 als Beschlagteile auf, welche auf einer gemeinsamen Achse 15 drehbar gelagert sind. Das Lagerblech 11 ist mit der Struktur der Rückenlehne 3 verbunden. Das Beschlagoberteil 12 bildet zusammen mit einem am Sitzteil 2 angebrachten Beschlagunterteil diejenigen Beschlagteile des Beschlages 5, mit denen die Neigung der Rückenlehne 3 einstellbar ist. Eine Klinke 17 ist mittels eines Lagerbolzens 19 am Lagerblech 11 schwenkbar gelagert. Der Schwenkpunkt der Klinke 17 ist mit C bezeichnet. Die Klinke 17 weist einen Rastzahn 21 auf, der durch Schwenken der Klinke 17 (in Fig. 1 gegen den Uhrzeigersinn) in Eingriff mit einer Rastaufnahme 22 des Beschlagoberteils 12 gelangt, um das Lagerblech 11 und das Beschlagoberteil 12 miteinander zu verriegeln. Rastzahn 21 und Rastaufnahme 22 sind so ausgelegt, daß keine Selbsthemmung auftritt. Im Ausführungsbeispiel ist die bezüglich des Lagerbolzens 19 radial äußere Flanke des Rastzahns 21 konvex gebogen und die zugeordnete Flanke der Rastaufnahme 22 eben ausgebildet, während die bezüglich des Lagerbolzens 19 radial innere Flanke des Rastzahns 21 eben ausgebildet und die zugeordnete Flanke der Rastaufnahme 22 bezüglich des Rastzahns 21 leicht gekrümmt ist. Die dadurch entstehenden Winkel sind größer als 12° und damit außerhalb der Selbsthemmung. Der Rastzahn 21 liegt an beiden Flanken am Rand der Rastaufnahme 22 an.

Zwischen der Klinke 17 und dem Lagerblech 11 ist ein Schaltblech 25 angeordnet, das schwenkbar auf einem Lagernocken 27 gelagert ist, welcher aus dem Material der Klinke 17 herausgedrückt ist. Der Schwenkpunkt des Schaltblechs 25 ist mit A bezeichnet. Im verriegelten Zustand liegt das Schaltblech 25 mit einer Kontur 29 an einem durch eine Ausprägung gebildeten Absatz 31 des Lagerblechs 11 an. Der Krümmungsmittelpunkt der Kontur 29 ist mit B bezeichnet, während der Berührungspunkt der Kontur 29 und des Absatzes 31 mit D bezeichnet ist. Da der Krümmungsmittelpunkt B bezüglich der Verbindungslinie von C und D in der Öffnungsrichtung der schwenkenden Klinke 17 aus dem verriegelten Zustand heraus nacheilend ist, verläuft die Anlagefläche wenigstens teilweise quer zur anfänglichen Öffnungsrichtung der Klinke 17, d.h. die Anlagefläche weist eine Komponente in radialer Richtung bezüglich des Lagerbolzens 19 auf.

Eine lebensdauerfeste Feder 33, die am Lagerblech 11 abgestützt und um den Lagerbolzen 19 geschlungen ist, ist durch eine Öffnung 17' in der Klinke 17 und eine im verriegelten Zustand dahinter befindlichen Öffnung 25' des Schaltblechs 25 geführt. Die Feder 33 kann am Schaltblech 25 enden oder durch eine Öffnung 11' im Lagerblech 11 weitergeführt sein. Der Angriffspunkt der Feder 33 innerhalb der Öffnung 25', die Anlagestelle des Schaltblechs 25 am Absatz 31 und die Anlagestelle des Rastzahns 21 an der Rastaufnahme 22 bilden ein Dreieck. Die Anlagestelle des Rastzahns 21 an der Rastaufnahme 22, die Achse 15 und der Lagerbolzen 19 bilden ebenfalls ein Dreieck. Die Feder 33 wirkt daher über mehrere Kraftkomponenten gleichzeitig.

Zum einen drückt die Feder 33 so auf das Schaltblech 25, daß dieses mit einer Kraftkomponente an den Absatz 31 angedrückt und unter Spannung dort gehalten wird. Aufgrund der vom Absatz 31 ausgeübten Reaktionskraft drückt das Schaltblech 25 mit der anderen Kraftkomponente über den Lagernocken 27 so auf die Klinke 17, daß der Rastzahn 21 in die Rastaufnahme 22 gedrückt wird. Die Klinke 17 und das Schaltblech 25 werden daher gleichzeitig durch die Feder 33 in die verriegelte Stellung gedrückt. Zum anderen wird über die auf den Rastzahn 21 in der Rastaufnahme 22 wirkende Kraftkomponente dem Spiel am Lagerbolzen 19 und an der Achse 15 entgegengewirkt, so daß das Spiel beseitigt oder zumindest verringert wird.

Die Öffnungen 17' und 25' können auch so angeordnet sein, daß die Feder 33 sowohl auf das Schaltblech 25 als auch auf die Klinke 17 drücken kann. Je nach Winkelverhältnis erfolgt dann die Übertragung der Kraftkomponente der Feder 33, die auf den Rastzahn 21 wirken soll, direkt auf die Klinke 17 oder über das Schaltblech 25 und den Lagernocken 27.

Um das Spiel beseitigen zu können, ist der Krümmungsmittelpunkt B der Kontur 29 oberhalb der Verbindungslinie von A und D angeordnet, d.h. in der Öffnungsrichtung der Klinke 17 bezüglich dieser Verbindungslinie voreilend, wobei der Krümmungsmittelpunkt B aber deutlich unterhalb der Verbindungslinie von C und D liegt, d.h. in der Öffnungsrichtung der Klinke 17 bezüglich dieser Verbindungslinie nacheilend. Die Anlagefläche von Kontur 29 und Absatz 31 liegt dann im wesentlichen tangential zur Öffnungsrichtung der Klinke 17 (etwa 6° bis 10°, beispielsweise 8°, so daß eine Selbsthemmung zwischen Kontur 29 und Absatz 31 auftreten kann). Um das öffnende Moment auf das Schaltblech 25 auszugleichen, welches dadurch entsteht, daß die durch D und B verlaufende Wirkungslinie der auf das Schaltblech 25 wirkenden Reaktionskraft am Schwenkpunkt A vorbeigeht, ist bei D ein Reibwert von µ > 0,6 vorgesehen. Würden A und B zusammenfallen, kann ein Formschluß verwirklicht werden, für den aber ein Spiel vorzusehen ist, um ein Öffnen des Schaltblechs 25, auch im Panikfall, zu gewährleisten.

Um die Rückenlehne 3 freischwenken zu können, weist das Schaltblech 25 an seinem unteren Rand eine Zugeinhängung 25" auf, in die beispielsweise ein Bowdenzug eingehängt ist. Der Bowdenzug ist dann entweder durch eine weitere Öffnung in der Klinke 17 oder im Lagerblech 11 aus dem Beschlag 5 heraus zu dem Betätigungshebel 9 geführt. Zum Freischwenken wird das Schaltblech 25 entgegen der Kraft der Feder 33 bewegt (in der Zeichnung im Uhrzeigersinn), und zwar durch Drehung um den Lagernocken 27. Bei dieser Schwenkbewegung kann das Schaltblech 25 mit seiner Kontur 29 am Absatz 31 vorbeigeführt werden. Danach nimmt das Schaltblech 25 über den Lagernocken 27 die Klinke 17 mit, deren Rastzahn 21 außer Eingriff mit der Rastaufnahme 22 gelangt. Dadurch ist das Lagerblech 11 (und damit die Rückenlehne 3) relativ zum Beschlagoberteil 12 um die Achse 15 schwenkbar (in der Zeichnung im Uhrzeigersinn).

Vorzugsweise ist für das Schaltblech 25 ein Anschlag an der Klinke 17 und für die Klinke 17 ein Anschlag am Lagerblech 11 vorgesehen. Das Lagerblech 11 weist vorzugsweise einen weiteren Anschlag 39 auf, der beim Zurückschwenken (in der Zeichnung im Gegenuhrzeigersinn) des Lagerblechs 11 (und damit der Rückenlehne 3) am Beschlagoberteil 12 anschlägt, bevor die Klinke 17 einfällt. Damit keine das Einfallen der Klinke 17 hindernde Überbestimmung vorliegt, besteht im verriegelten Zustand zwischen diesem weiteren Anschlag 39 und dem Beschlagoberteil 12 ein kleiner Abstand.

Bezüglich einer Drehung des Schaltblechs 25 zusammen mit der Klinke 17 um den Lagerbolzen 19 liegt das Schaltblech 25 mit seiner Kontur 29 am Absatz 31 an, so daß das Schaltblech 25 und der Absatz 31 als Sperrelemente wirken können. Wird im Crashfall oder bei Druck auf die Rückenlehne 3 das Lagerblech 11 so gedrückt, daß der Rastzahn 21 aus der Rastaufnahme 22 heraus bewegt werden würde, also die Klinke 17 zusammen mit dem Schaltblech 25 zu einer Schwenkbewegung um den Lagerbolzen 19 gezwungen würde, liegt der Absatz 31 über das Schaltblech 25 in der anfänglichen, öffnenden Schwenkrichtung der Klinke 17. Das Schaltblech 25 verhindert so eine öffnende Schwenkbewegung der Klinke 17. Andererseits ist trotzdem eine Panikentriegelung möglich, d.h., bei Zug am Schaltblech 25 kann dieses um den Lagernocken 27 schwenken und am Absatz 31 vorbeigeführt werden.

Eine ungewollte Schwenkbewegung des Schaltblechs 25 im Crashfall aufgrund einer Beschleunigung wird dadurch vermieden, daß der Schwerpunkt S des Schaltblechs 25 (ohne Bowdenzug) mit dem Schwenkpunkt A zusammenfällt. Die Zugeinhängung 25" sollte so gestaltet sein, daß die Massenkräfte des Bowdenzuges nicht zum Öffnen des Schaltblechs 25 führen. Während beim Heckcrash der mit dem Beschlagoberteil 12 zusammenwirkende Absatz 39 eine Schwenkbewegung des Lagerblechs 11 abfangen kann, sollte in Hinblick auf den Fall eines Frontalcrashs der Schwerpunkt S, sofern er nicht mit dem Schwenkpunkt A zusammenfällt, auf oder unterhalb der Waagerechten durch den Schwenkpunkt A liegen, was auch für die Zugeinhängung 25" gilt.

### Bezugszeichenliste

- 1: Fahrzeugsitz
- 2: Sitzteil
- 3: Rückenlehne
- 5: Beschlag
- 9: Betätigungshebel
- 11: Lagerblech
- 11': Öffnung im Lagerblech
- 12: Beschlagoberteil
- 15: Achse
- 17: Klinke
- 17': Öffnung in der Klinke
- 19: Lagerbolzen
- 21: Rastzahn
- 22: Rastaufnahme
- 25: Schaltblech
- 25': Öffnung im Schaltblech
- 25": Zugeinhängung
- 27: Nocken
- 29: Kontur
- 31: Absatz
- 33: Feder
- 39: weiterer Absatz
- A: Schwenkpunkt des Schaltblechs
- B: Krümmungsmittelpunkt des Schaltblechs
- C: Schwenkpunkt der Klinke
- D: Berührungspunkt
- S: Schwerpunkt des Schaltblechs

## Patentansprüche

1. Beschlag für einen Fahrzeugsitz, insbesondere für einen Kraftfahrzeugsitz, mit
a) wenigstens zwei Beschlagteilen (11, 12), die zum Freischwenken der Rückenlehne (3) des Fahrzeugsitzes (1) relativ zueinander schwenkbar sind
b) einer Klinke (17), welche um eine Schwenkachse (19, C) schwenkbar an einem der Beschlagteile (11) gelagert ist und durch welche die zwei Beschlagteile (11, 12) verriegelbar sind,
c) einem Sperrelement (25), welches an der Klinke (17) mit einer von der Schwenkachse (19, C) der Klinke (17) verschiedenen Schwenkachse (27, A) angelenkt ist,
d) einem weiteren Sperrelement (31), welches an dem Beschlagteil (11) vorgesehen ist, an dem die Klinke (17) gelagert ist, wobei die Klinke (17) im verriegelten Zustand der Beschlagteile (11, 12)wenigstens teilweise durch die Sperrelemente (25, 31) gesichert ist, welche sich in Anlage aneinander befinden,
**dadurch gekennzeichnet, dass**
e) im verriegelten Zustand der Beschlagteile (11, 12) die Anlagefläche der beiden Sperrelemente (25, 31) aneinander eine radiale Komponente bezüglich der Schwenkachse (19, C) der Klinke (17) aufweist und im wesentlichen tangential zur Schwenkrichtung des an der Klinke (17) angelenkten Sperrelementes (25) angeordnet ist.

2. Beschlag nach Anspruch 1, **dadurch gekennzeichnet, dass** das an der Klinke (17) angelenkte Sperrelement (25) zugleich das Bauteil zum Entriegeln der Klinke (17) bildet.

3. Beschlag nach Anspruch 1 oder 2, **dadurch gekennzeichnet, dass** im verriegelten Zustand der Beschlagteile (11, 12) die in Anlage aneinander befindlichen Sperrelemente (25, 31) einem Spiel in den Lagerstellen (15, 19) der Beschlagteile (11, 12) und/oder der Klinke (17) entgegenwirken.

4. Beschlag nach einem der Ansprüche 1 bis 3, **dadurch gekennzeichnet, dass** eine Feder (33) die Sperrelemente (25, 31) unter Spannung in Anlage aneinander hält.

5. Beschlag nach Anspruch 3 und 4, **dadurch gekennzeichnet, dass** die Feder (33) über die in Anlage aneinander befindlichen Sperrelemente (25, 31) als Widerlager dem Spiel an den Lagern (15, 19) der Beschlagteile (11, 12) und/oder der Klinke (17) entgegenwirkt.

6. Beschlag nach Anspruch 4 oder 5, **dadurch gekennzeichnet, dass** die Feder (33) über das an der Klinke (17) angelenkte Sperrelement (25) zugleich die Klinke (17) im verriegelten Zustand hält.

7. Beschlag nach einem der Ansprüche 4 bis 6, **dadurch gekennzeichnet, dass** die Angriffsstelle der Feder (33) an einem der Sperrelemente (25), die Anlagestelle der Sperrelemente (25, 31) aneinander und die Anlagestelle zwischen der Klinke (17) und einem der Beschlagteile (12) im verriegelten Zustand ein Dreieck bilden.

8. Beschlag nach einem der Ansprüche 1 bis 7, **dadurch gekennzeichnet, dass** die Anlagestelle zwischen der Klinke (17) und einem der Beschlagteile (12) im verriegelten Zustand, die gemeinsame Schwenkachse (15) der Beschlagteile (11, 12) und die Schwenkachse (19, C) der Klinke (17) ein Dreieck bilden.

9. Fahrzeugsitz mit wenigstens einem Beschlag nach einem der Ansprüche 1 bis 8.

## Claims

1. Fitting for a vehicle seat, in particular for a motor vehicle seat, having
a) at least two fitting members (11, 12) which can be pivoted relative to each other in order to freely pivot the backrest (3) of the vehicle seat (1),
b) a detent (17) which is pivotably supported on one of the fitting members (11) about a pivot axis (19, C) and by means of which the two fitting members (11, 12) can be locked,
c) a locking element (25) which is articulated to the detent (17) with a pivot axis (27, A) which is different from the pivot axis (19, C) of the detent (17),
d) a further locking element (31) which is provided on the fitting member (11) on which the detent (17) is supported, the detent (17) being, when the fitting members (11, 12) are in the locked state, at least partially secured by the locking elements (25, 31) which are in mutual abutment,
**characterised in that**
e) when the fitting members (11, 12) are in the locked state, the mutual abutment face of the two locking elements (25, 31) has a radial component relative to the pivot axis (19, C) of the detent (17) and is arranged substantially tangentially relative to the pivot direction of the locking element (25) which is articulated to the detent (17).

2. Fitting according to claim 1, **characterised in that** the locking element (25) which is articulated to the detent (17) at the same time forms the component for unlocking the detent (17).

3. Fitting according to claim 1 or 2, **characterised in that**, when the fitting members (11, 12) are in the locked state, the locking elements (25, 31) which are in mutual abutment counteract a play in the bearing locations (15, 19) of the fitting members (11, 12) and/or the detent (17).

4. Fitting according to any one of claims 1 to 3, **characterised in that** a spring (33) retains the locking elements (25, 31) in mutual abutment in a state of tension.

5. Fitting according to claims 3 and 4, **characterised in that** the spring (33), by means of the locking elements (25, 31) which are in mutual abutment, acts as an abutment counter to the play at the bearings (15, 19) of the fitting members (11, 12) and/or the detent (17).

6. Fitting according to claim 4 or 5, **characterised in that** the spring (33) at the same time retains the detent (17) in the locked state by means of the locking element (25) which is articulated to the detent (17).

7. Fitting according to any one of claims 4 to 6, **characterised in that** the engagement location of the spring (33) on one of the locking elements (25), the mutual abutment location of the locking elements (25, 31) and the abutment location between the detent (17) and one of the fitting members (12) in the locked state form a triangle.

8. Fitting according to any one of claims 1 to 7, **characterised in that** the abutment location between the detent (17) and one of the fitting members (12) in the locked state, the common pivot axis (15) of the fitting members (11, 12) and the pivot axis (19, C) of the detent (17) form a triangle.

9. Vehicle seat having at least one fitting according to any one of claims 1 to 8.

## Revendications

1. Armature pour un siège de véhicule, en particulier pour un siège de véhicule automobile, avec :
(a) au moins deux parties d'armature (11, 12), qui sont aptes à pivoter l'une par rapport à l'autre pour le pivotement libre du dossier (3) du siège de véhicule (1);
(b) un cliquet (17), lequel est monté apte à pivoter autour d'un axe de pivotement (19,C) sur l'une des parties d'armature (11) et par lequel les deux parties d'armature (11, 12) sont verrouillables ;
(c) un élément d'arrêt (25), lequel est articulé sur le cliquet (17) avec un axe de pivotement (27, A) différent de l'axe de pivotement (19, C) du cliquet (17) ;
(d) un autre élément d'arrêt (31), lequel est prévu sur la partie d'armature (11) sur laquelle le cliquet (17) est monté, à l'occasion de quoi le cliquet (17) est bloqué dans l'état verrouillé des parties d'armature (11, 12) au moins en partie par les éléments d'arrêt (25, 31), lesquels se trouvent an appui l'un contre l'autre,
**caractérisée par le fait que** :
(e) dans l'état verrouillé des parties d'armature (11, 12), la surface d'appui des deux éléments d'arrêt (25, 31) l'un contre l'autre présente une composante radiale par rapport à l'axe de pivotement (19, C) du cliquet (17) et est disposée sensiblement tangentiellement à la direction de pivotement de l'élément d'arrêt (25) articulé sur le cliquet (17).

2. Armature selon la revendication 1, **caractérisée par** 1e fait que l'élément d'arrêt (25) articulé sur 1e cliquet (17) forme en même temps le composant pour le déverrouillage du cliquet (17).

3. Armature selon l'une des revendications 1 ou 2, **caractérisée par le fait que**, dans l'état verrouillé des parties d'armature (11, 12), les éléments d'arrêt (25, 31) se trouvant en appui l'un contre l'autre s'opposent à un jeu dans les positions de palier (15, 19) des parties d'armature (11, 12) et/ou du cliquet (17).

4. Armature selon l'une des revendications 1 à 3, **caractérisée par le fait qu'**un ressort (33) maintient les éléments d'arrêt (25, 31) sous tension en appui l'un contre l'autre.

5. Armature selon l'une des revendications 3 et 4, **caractérisée par le fait que** le ressort (33) s'oppose au jeu sur les paliers (15, 19) des parties d'armature (11, 12) et/ou du cliquet (17) par les éléments d'arrêt (25, 31) se trouvant en appui l'un contre l'autre comme butée.

6. Armature selon l'une des revendications 4 ou 5, **caractérisée par le fait que** le ressort (33) maintient en même temps le cliquet (17) dans l'état verrouillé par l'élément d'arrêt (25) articulé sur le cliquet (17).

7. Armature selon l'une des revendications 4 à 6, **caractérisée par le fait que** la position d'attaque du ressort (33) sur l'un des éléments d'arrêt (25), la position d'appui des éléments d'arrêt (25, 31) l'un contre l'autre et la position d'appui entre le cliquet (17) et l'une des parties d'armature (12) dans l'état verrouillé forme un triangle.

8. Armature selon l'une des revendications 1 à 7, **caractérisée par le fait que** la position d'appui entre le cliquet (17) et l'une des parties d'armature (12) à l'état verrouillé, l'axe de pivotement commun (15) des parties d'armature (11, 12) et l'axe de pivotement (19, C) du cliquet (17) forment un triangle.

9. Siège de véhicule présentant au moins une armature telle que définie à l'une des revendications 1 à 8.
